# EUROPÄISCHE PATENTSCHRIFT

(11) **EP 4 203 246 B1**
(45) Veröffentlichungstag und Bekanntmachung des Hinweises auf die Patenterteilung: **25.02.2026**
(21) Anmeldenummer: 22188726.8
(22) Anmeldetag: 04.08.2022
(51) Int. Cl.: H02K 1/14, H02K 7/116, H02K 16/00, H02K 37/12, H02K 37/24

(54) **SCHRITTMOTOR**
STEPPING MOTOR
MOTEUR PAS À PAS

(30) Priorität: 22.12.2021 DE 102021134374
(43) Veröffentlichungstag der Anmeldung: 28.06.2023
(73) Patentinhaber: ECO Holding 1 GmbH, 97828 Marktheidenfeld (DE)
(72) Erfinder: MUDRA, Alexander, 97828 Marktheidenfeld (DE); SCHULZE, Dietmar, 35516 Münzenberg (DE); SEIDENSCHWANN, André, 63526 Erlensee (DE)
(74) Vertreter: Keller Schneider Patentanwaltsgesellschaft mbH

(56) Entgegenhaltungen:
- US-A1- 2016 072 362
- US-B1- 6 198 182
- US-B1- 6 222 287

## Beschreibung

### Technisches Gebiet

Die Erfindung betrifft einen Schrittmotor, mit einem ersten Stator, einem ersten Rotor, welcher bezüglich des ersten Stators rotierbar angeordnet ist, einem zweiten Stator, einem zweiten Rotor, welcher bezüglich des zweiten Stators rotierbar angeordnet ist.

### Stand der Technik

Klassische Schrittmotoren verfügen über Abtriebsmittel zum Übertragen des Antriebsdrehmoments, welche in Verlängerung der Rotationsachse angeordnet sind. Diese Anordnung bringt beispielsweise den Nachteil mit sich, dass ein verhältnismäßig großer axialer Bauraum benötigt wird. Zusätzlich muss das Drehmoment um 90° umgelenkt werden, was zusätzlich den Einsatz eines Schneckenrades erfordert. Ein weiterer Nachteil ergibt sich aus der Tatsache, dass durch die Verlängerung der Rotationsachse Biegemomente entstehen, welche den Einsatz zusätzlicher Lagerstellen erfordern. Sowohl Schneckenräder als auch Lagerstellen zur Aufnahme von Biegemomenten sind kostenintensiv.

US 6 222 287 B1 beschreibt einen Schrittmotor mit den Merkmalen des Oberbegriffs des Patentanspruchs 1. Ein elektromechanischer Aktuator mit einem ähnlichen Schrittmotor, der zwei Statoren aufweist, ist aus US 6 198 182 B1 bekannt. US 2016/072362 A1 offenbart eine Pumpe mit einem Elektromotor, der ebenfalls zwei Statoren umfasst, jedoch lediglich einen einzigen Rotor, der zwischen diesen Statoren angeordnet ist.

### Darstellung der Erfindung

Aufgabe der Erfindung ist es, einen dem eingangs genannten technischen Gebiet zugehörender Schrittmotor zu schaffen, welcher die Nachteile aus dem Stand der Technik zumindest teilweise überwindet. Insbesondere ist es die Aufgabe der Erfindung ein verbessertes Konzept eines Schrittmotors vorzuschlagen. Des Weiteren ist es die Aufgabe der vorliegenden Erfindung ein verbessertes Konzept eines Fluidhandhabungselements vorzuschlagen. Zusätzlich ist es die Aufgabe der vorliegenden Erfindung ein verbessertes Konzept eines Thermomanagementmoduls vorzuschlagen.

Die Lösung der Aufgabe ist durch die Merkmale des Anspruchs 1 definiert. Die Erfindung umfasst einen Schrittmotor, mit einem ersten Stator, einem ersten Rotor, welcher bezüglich des ersten Stators rotierbar angeordnet ist, einem zweiten Stator, einem zweiten Rotor, welcher bezüglich des zweiten Stators rotierbar angeordnet ist, einem Verbindungselement, welches den ersten Rotor und der zweiten Rotor drehfest miteinander verbindet.

Daraus ergibt sich beispielsweise der technische Vorteil, dass der Schrittmotor besonders kompakt gestaltet und mit geringem axialem Bauraum hergestellt werden kann. Ein weiterer Vorteil ergibt sich daraus, dass der erste Stator und der erste Rotor baugleich mit dem zweiten Stator und dem zweiten Rotor realisierbar sind. Dies reduziert sowohl die Herstellungs- als auch die Montagekosten.

Erfindungsgemäß ist das Verbindungselement zwischen dem ersten Rotor und dem zweiten Rotor angeordnet. Dadurch wird beispielsweise der technische Vorteil erreicht, dass durch das Verbindungselement ein axialer Abstand zwischen dem ersten Rotor und dem zweiten Rotor realisierbar ist. Der axiale Abstand kann beispielsweise durch eine gezielte Auswahl der axialen Höhe des Verbindungselements an einen bestimmten Zweck angepasst werden.

Erfindungsgemäß bildet das Verbindungselement einen axialen Abstand zwischen dem ersten Rotor und dem zweiten Rotor aus. Dadurch wird beispielsweise der technische Vorteil erreicht, dass durch eine geeignete Auswahl des Verbindungselements der axiale Abstand des ersten Rotors zum zweiten Rotor einstellbar ist. Insgesamt lässt sich damit die axiale Bauhöhe des gesamten Schrittmotors an einen bestimmten Einsatzzweck anpassen.

Erfindungsgemäß weisen der erste Rotor und der zweite Rotor eine gemeinsame Drehachse auf. Dadurch wird beispielsweise der technische Vorteil erreicht, dass der erste Rotor und der zweite Rotor synergetisch den Antrieb des Schrittmotors bewirken. Beispielsweise sind der erste Stator und der zweite Stator zueinander phasenversetzt angeordnet. Alternativ oder zusätzlich können der erste Rotor und der zweite Rotor zueinander phasenversetzt angeordnet sein.

Gemäß einer zusätzlichen Ausführungsform ist das Verbindungselement als Abtriebsmittel des Schrittmotors ausgebildet. Dadurch wird beispielsweise der technische Vorteil erreicht, dass eine biegemomentfreie Übertragung des Drehmoments von dem Schrittmotor auf eine Abtriebsanordnung möglich ist. Die Abtriebsanordnung wälzt sich unmittelbar auf dem Verbindungselement ab, wodurch keine zusätzliche Lagerung der Abtriebswelle erforderlich ist. Insgesamt wird eine sehr gute Konzentrizität der gesamten Anordnung erreicht, wobei der Abtrieb direkt am Schrittmotor und zwischen den beiden Statoren erfolgt.

Um das Verbindungsmittel möglichst einfach als Abtriebsmittel auszubilden, weist das Verbindungselement eine Außenverzahnung auf. Dadurch wird beispielsweise der technische Vorteil erreicht, dass das Verbindungsmittel als einfaches Ritzel ausgebildet werden kann. Die Außenverzahnung des Verbindungsmittels kann unmittelbar mit einer Abtriebsanordnung verzahnt werden, wodurch die Abtriebsanordnung als Stirnradgetriebe ausführbar ist. Dadurch ist weder eine Umlenkung des Drehmoments noch ein Schneckenradgetriebe notwendig. Insgesamt vereinfacht dies die Herstellungs- und Montagekosten des Schrittmotors einschließlich der zugeordneten Abtriebsanordnung. Nach einer weiteren bevorzugten Ausführungsform ist das Verbindungselement hülsenartig ausgebildet. Dadurch wird beispielsweise der technische Vorteil erreicht, dass das Verbindungselement als besonders preiswertes Bauteil ausgebildet ist. Zusätzlich besteht der Vorteil, dass mittels eines hülsenartigen Verbindungselements eine sehr einfache Montage des Schrittmotors möglich ist. Hierbei können der erste Rotor und der zweite Rotor axial in das Verbindungselement eingeführt werden.

Gemäß einer weiteren vorteilhaften Ausführungsform weist das Verbindungselement eine Innenverzahnung auf. Dadurch wird beispielsweise der technische Vorteil erreicht, dass eine unmittelbare Drehmomentübertragung von dem ersten Rotor auf den zweiten Rotor möglich ist. Dadurch hat das Verbindungselement eine Doppelfunktion. Einerseits dient das Verbindungselement der Drehmomentübertragung zwischen der ersten Rotor-Statoranordnung und der zweiten Rotor-Statoranordnung. Andererseits dient das Verbindungselement mit seiner ritzelartigen Außenverzahnung als Abtriebsmittel des Schrittmotors auf die Abtriebsanordnung. Zusätzlich besteht auch bei dieser Ausführungsform der Vorteil, dass mittels des Verbindungselements eine sehr einfache Montage des Schrittmotors möglich ist. Hierbei können der erste Rotor und der zweite Rotor axial in das Verbindungselement eingeführt werden.

Nach einer weiteren Ausführungsform weist der erste Stator und/ oder der zweite Stator jeweils einen Innenstator und einen Außenstator auf. Dadurch wird beispielsweise der technische Vorteil erreicht, dass die magnetische Flussdichte zwischen Rotor und Stator erhöht und damit eine Verstärkung des Ausrichtdrehmoments des Rotors erreicht werden kann. Somit kann die Effizienz des vorhandenen Magnetmaterials am Rotor erhöht werden.

Um die Montage des Schrittmotors zu vereinfachen, erstreckt sich erfindungsgemäß ein Axialdurchgang vom dem ersten Rotor und dem ersten Stator, durch das Verbindungselement hindurch, und durch den zweiten Rotor und den zweiten Stator, wobei der Axialdurchgang zum Anordnen des Schrittmotors auf einem raumfesten Stift ausgebildet ist. Dadurch besteht beispielsweise der technische Vorteil, dass der gesamte Schrittmotor einfach auf dem raumfesten Stift angeordnet werden kann. Beispielsweise ist der raumfeste Stift fester Bestandteil eines Gehäuses oder einer Oberfläche, wodurch sowohl das Aufbringen des Schrittmotors als auch das Entfernen des Schrittmotors sehr einfach möglich ist.

Nach einer besonderen Ausführungsform ist der erste Rotor an einem ersten Magnetträger angeordnet und der zweite Rotor an einem zweiten Magnetträger angeordnet, wobei der erste Magnetträger und der zweite Magnetträger jeweils drehfest mit dem Verbindungselement verbunden sind. Dadurch wird beispielsweise der technische Vorteil erreicht, dass das Drehmoment der Rotoren jeweils unmittelbar auf das Verbindungselement übertragen wird. Somit werden keine zusätzlichen Bauteile und Fügestellen zur Drehmomentübertragung benötigt. Dadurch werden die Anzahl der Bauteile und das Gewicht reduziert. Dies reduziert zusätzlich den Montageaufwand und somit die Herstellungskosten.

Gemäß einer besonders bevorzugten Ausführungsform ist der erste Stator einschließlich des zugeordneten Innenstators, des Außenstators und des ersten Rotors baugleich mit dem zweiten Stator einschließlich des zugeordneten Innenstators, des Außenstators und dem zweiten Rotor ausgebildet. Dadurch wird beispielsweise der technische Vorteil erreicht, dass die Herstellung des Schrittmotors deutlich vereinfacht wird. Der erste Rotor entspricht identisch dem zweiten Rotor, wodurch eine Austauschbarkeit möglich ist. Der erste Stator entspricht identisch dem zweiten Stator, wodurch eine Austauschbarkeit ebenfalls gegeben ist.

Nach einer weiteren vorteilhaften Ausführungsform sind der erste Stator und der zweite Stator und/oder der erste Rotor und der zweite Rotor zueinander phasenversetzt angeordnet. Dadurch ergibt sich beispielsweise der technische Vorteil, dass der Aufbau des Schrittmotors möglichst flexibel bleibt. Wie in einer der vorstehenden Ausführungsformen ausgeführt, können der erste Stator und der erste Rotor baugleich mit dem zweiten Stator und dem zweiten Rotor ausgebildet werden. Somit ist es möglich, dass erst bei der Montage die für die Funktion des Schrittmotors notwendige Phasenversetzung realisiert wird. Mit anderen Worten kann der Schrittmotor aus baugleichen Bestandteilen montiert werden, wobei in Abhängigkeit der Anforderungen an den Schrittmotor eine Phasenversetzung zwischen dem ersten Rotor und dem zweiten Rotor realisiert werden kann. Alternativ oder zusätzlich kann die Phasenversetzung zwischen dem ersten Stator und dem zweiten Stator realisiert werden.

Ein weiterer Aspekt der vorliegenden Erfindung betrifft ein Fluidhandhabungselement mit einem Schrittmotor nach einem der vorstehenden Ausführungsformen. Dadurch sind vergleichbare technische Vorteile realisierbar, wie sie durch den unabhängigen Anspruch 1 realisierbar sind. Beispielsweise kann der Schrittmotor besonders kompakt gestaltet und mit geringem axialem Bauraum hergestellt werden. Dadurch kann ein Fluidhandhabungselement, welches von einem erfindungsgemäßen Schrittmotor betrieben wird, ebenfalls sehr kompakt ausgestaltet werden. Aufgrund des zusätzlichen Vorteils, nach welchem der erste Stator und der erste Rotor baugleich mit dem zweiten Stator und dem zweiten Rotor realisierbar sind, können auch in Bezug auf die Herstellungs- und die Montagekosten des Fluidhandhabungselement große Effizienzsteigerungen erreicht werden.

Ein Fluidhandhabungselement ist als eine Vorrichtung zur Handhabung von Fluid innerhalb eines zumindest teilweise elektrisch angetriebenen Fahrzeugs zu verstehen. Die Vorrichtung kann beispielsweise als Ventil oder als Fluidpumpe ausgebildet sein.

Ein weiterer Aspekt der vorliegenden Erfindung betrifft ein Thermomanagementmodul für ein zumindest teilweise betriebenes Kraftfahrzeug mit einem Schrittmotor oder mit einem Fluidhandhabungselement nach einem der vorstehenden Ausführungsformen. Dadurch sind vergleichbare technische Vorteile realisierbar, wie sie durch den unabhängigen Anspruch 1 oder ein erfindungsgemäßes Fluidhandhabungselement realisierbar sind.

Derartige Vorrichtungen sind im Stand der Technik auch als Energieoptimierungsmodul oder als Thermomanagement-Vorrichtung bekannt. Im Wesentlichen erfüllt die Thermomanagement-Vorrichtung die Aufgabe der energetischen Optimierung des Wärmehaushalts im Kraftfahrzeug mit dem Ziel der Verbrauchs- und Emissionsreduzierung, der Gewährleistung der Motorkühlung in jedem Betriebspunkt sowie der Optimierung des Innenraumkomforts. Ziel ist es, die Wärmeströme wie Wärmezufuhr und Wärmeabfuhr im Motor (z.B. Verbrennungsmotor, Elektromotor) aber auch in Batterien oder der Leistungselektronik batteriebetriebener Fahrzeuge, Getrieben oder im Fahrgastraum optimal zu leiten, um den Energieverbrauch zu reduzieren und den Innenraumkomfort zu erhöhen. Wärme wird dabei mittels eines Wärmeträgers, wie Kühlmittel oder Luft, meist durch erzwungene Konvektion von einem Körper zu einem anderen Körper transportiert. Über Wärmeüberträger, wie beispielsweise Kühler, Ladeluftkühler, AGR-I<ühler oder Klima-Kondensatoren, wird Wärme von einem Fluid an ein anderes Fluid übertragen. Die Stoffströme der Fluide werden insbesondere durch Pumpen aufrechterhalten. Einen ausreichenden Kühlluftmassenstrom gewährleistet oftmals der Fahrtwind, so dass viele Fahrzeuge mit elektrisch angetriebenen I<ühlerlüftern ausgerüstet werden, sofern der Fahrfahrtwind nicht ausreicht.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Schnittdarstellung eines erfindungsgemäßen Schrittmotors nach einer ersten Ausführungsform;
- Fig. 2: eine Explosionsdarstellung eines erfindungsgemäßen Schrittmotors nach einer weiteren Ausführungsform;
- Fig. 3: eine perspektivische Darstellung eines erfindungsgemäßen Schrittmotors in Verbindung mit einem Stirnradgetriebe in einer beispielhaften Ausführungsform;
- Fig. 4: eine perspektivische Darstellung eines Schrittmotors in Verbindung mit einem Stirnradgetriebe in einer gegenüber der Erfindung alternativen Ausgestaltung;
- Fig. 5: eine perspektivische Darstellung einer Rotoranordnung für einen Schrittmotor nach einer gegenüber der Erfindung alternativen Ausgestaltung;
- Fig. 6: eine weitere Schnittdarstellung eines Schrittmotors in einer gegenüber der Erfindung alternativen Ausgestaltung;
- Fig. 7: eine noch weitere Schnittdarstellung eines Schrittmotors in einer gegenüber der Erfindung alternativen Ausgestaltung; und
- Fig. 8: eine perspektivische Darstellung eines Außenrotors eines erfindungsgemäßen Schrittmotors.

Grundsätzlich sind in den Figuren gleiche Teile mit gleichen Bezugszeichen versehen.

### Wege zur Ausführung der Erfindung

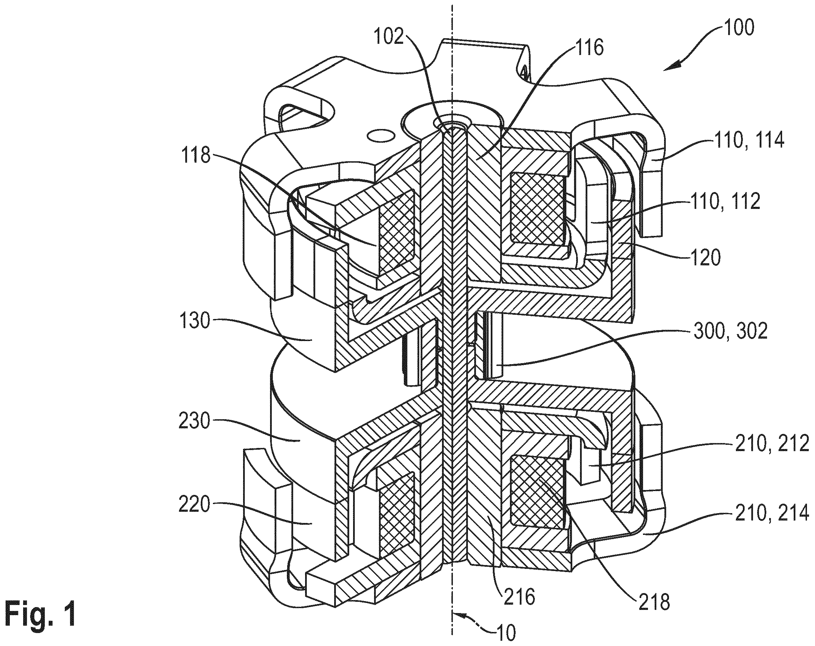

Die Figur 1 zeigt eine Schnittdarstellung eines erfindungsgemäßen Schrittmotors 100 nach einer ersten Ausführungsform. Der Schrittmotor 100 hat einen ersten Stator 110 und einen zweiten Stator 210. Zusätzlich hat der Schrittmotor 100 einen ersten Rotor 120, der bezüglich des ersten Stators 110 rotierbar angeordnet ist, und einen zweiten Rotor 220, der bezüglich des zweiten Stators 210 rotierbar angeordnet ist. Der erste Rotor 120 und der zweite Rotor 220 sind koaxial zueinander angeordnet und verfügen über eine gemeinsame Drehachse 10. Der erste Stator 110 umfasst einen Innenstator 112 und einen Außenstator 114, wobei sich zwischen dem Innenstator 112 und dem Außenstator 114 der erste Rotor 120 befindet.

Entsprechend baugleich zu dem ersten Stator 110 umfasst der zweite Stator 210 einen Innenstator 212 und einen Außenstator 214, wobei sich zwischen dem Innenstator 212 und dem Außenstator 214 der zweite Rotor 220 befindet. Insgesamt ist der erste Stator 110 einschließlich des Innenstators 112, des Außenstators 114 und des ersten Rotors 120 baugleich mit dem zweiten Stator 210 einschließlich des zugeordneten Innenstators 212, des Außenstators 214 und dem zweiten Rotor 220 ausgebildet.

Zusätzlich umfasst der erste Stator 110 ein erstes Polrohr 116, welches innerhalb einer ersten Spule 118 angeordnet ist. Das erste Polrohr 116 ist an einem oberen Ende mit dem Außenstator 114 verbunden. An einem unteren Ende ist das erste Polrohr 116 mit dem Innenstator 112 verbunden. Die erste Spule 118 ist koaxial zum ersten Polrohr 116 angeordnet. Der zweite Stator 210 umfasst ein zweites Polrohr 216, welches innerhalb einer zweiten Spule 218 angeordnet ist. Das zweite Polrohr 216 ist an einem oberen Ende mit dem Innenstator 212 verbunden. An einem unteren Ende ist das zweite Polrohr 216 mit dem Außenstator 214 verbunden. Die zweite Spule 218 ist koaxial zum zweiten Polrohr 216 angeordnet.

Der erste Rotor 120 ist an einem ersten Magnetträger 130 angeordnet. Entsprechend ist der zweite Rotor 220 an einem zweiten Magnetträger 230 angeordnet. Das Drehmoment des ersten Rotors 120 und des zweiten Rotors 220 wird somit unmittelbar auf den ersten Magnetträger 130 und den zweiten Magnetträger 230 übertragen.

Aufgrund eines Verbindungselements 300, welches zwischen dem ersten Magnetträger 130 und dem zweiten Magnetträger 230 angeordnet ist, sind der erste Magnetträger 130 und der zweite Magnetträger 230 drehfest miteinander verbunden. Hierdurch wird jeweils ein Drehmoment der ersten Rotor-Statoranordnung auf die zweite Rotor-Statoranordnung übertragen und umgekehrt. Hierfür sind der erste Rotor 120 und der zweite Rotor 220 zueinander phasenversetzt angeordnet. Zusätzlich oder auch alternativ dazu, können auch der erste Stator 110 und der zweite Stator 210 zueinander phasenversetzt angeordnet sein. In jedem Fall stellt die drehfeste Verbindung des ersten Magnetträgers 130 und des zweiten Magnetträger 230 die Funktion des Schrittmotors 100 sicher.

Das Verbindungselement 300 realisiert einen axialen Abstand zwischen dem ersten Rotor 120 und dem zweiten Rotor 220, indem der erste Magnetträger 130 und der zweite Magnetträger 230 drehfest mit dem Verbindungselement 300 verbunden werden. Beispielsweise verfügt das Verbindungselement 300 eine Innenverzahnung, wodurch eine einfache Form der Drehmomentübertragung zwischen dem ersten Rotor 120 und dem zweiten Rotor 220 realisiert werden kann. Zusätzlich verfügt das Verbindungselement 300 über eine Außenverzahnung 302. Die Außenverzahnung 302 ermöglicht es, dass das Verbindungselement 300 als Abtriebsmittel des Schrittmotors 100 genutzt werden kann. Hierdurch kann die Übertragung des Antriebsdrehmoments des Schrittmotors 100 biegemomentfrei auf eine Abtriebsanordnung erfolgen. Dadurch wird die Konzentrizität der gesamten Anordnung durch den mittigen Abtrieb am Verbindungselement 300 zwischen den beiden Statoren 110, 120 verbessert. Die Außenverzahnung 302 des Verbindungselements 300 kann unmittelbar mit einer stirnradgetriebenen Abtriebsanordnung verzahnt werden, wodurch eine Umlenkung des Drehmoments um 90° nicht mehr notwendig ist.

Der gesamt Schrittmotor 100 verfügt über einen Axialdurchgang 102, welcher sich vom ersten Rotor 120 und ersten Stator 110, durch das Verbindungselement 300 hindurch, und durch den zweiten Rotor 220 und den zweiten Stator 210 erstreckt. Hierbei verläuft der Axialdurchgang 102 durch das erste Polrohr 116, das Verbindungselement 300 und das zweite Polrohr 216. Durch den durchgehenden Axialdurchgang 102 ist es möglich, den gesamten Schrittmotor 100 auf einem raumfesten Stift 400 (nicht gezeigt) anzuordnen. Der raumfeste Stift 400 kann beispielsweise fest mit einem Gehäuse oder einer Wandung verbunden werden. Der Schrittmotor 100 hingegen kann einfach auf den Stift 400 aufgeschoben oder von ihm entfernt werden.

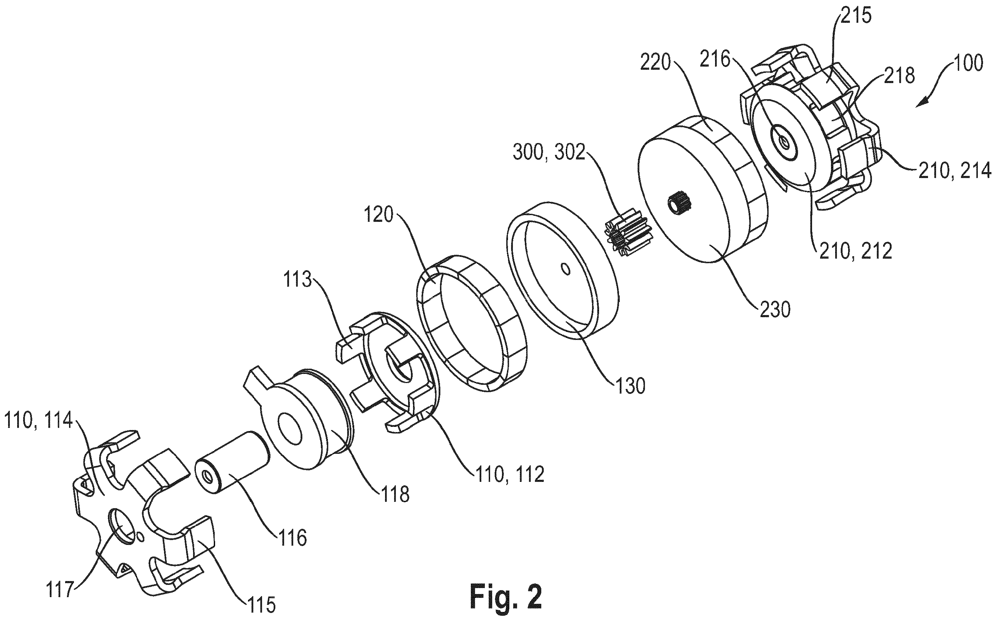

Die Figur 2 zeigt eine Explosionsdarstellung eines erfindungsgemäßen Schrittmotors 100 nach einer weiteren Ausführungsform. Der Schrittmotor 100 umfasst die Komponenten erster Stator 110, welcher gleichzeitig auch den Außenstator 114 darstellt, das erste Polrohr 116, welches in eine Pohlrohraufnahme 117 in Form einer oberen Öffnung des Außenstators 114 eingebracht ist, und die koaxial zum ersten Polrohr 116 aufzubringende erste Spule 118. Der Innenstator 112 schließt die erste Spule 118 von der Unterseite her ab. Der erste Rotor 120, welcher als Magnetring ausgebildet ist, ist exakt zwischen den Außenfingern 115 des Außenstators 114 und den Innenfingern 113 des Innenstators 112 angeordnet. Getragen wird der erste Rotor 120 in Form des Magnetrings von dem ersten Magnetträger 130, welcher beispielsweise als Kunststoffbauteil ausgebildet ist. Zwischen dem ersten Magnetträger 130, welcher den ersten Rotor 120 trägt, und dem zweiten Magnetträger 230, welcher den zweiten Rotor 220 trägt, befindet sich ein Verbindungselement 300 mit einer Außenverzahnung 302.

Das Verbindungselement 300 stellt eine drehfeste Verbindung zwischen dem ersten Magnetträger 130 und dem zweiten Magnetträger 230 her. Unmittelbar unterhalb des zweiten Magnetträgers 230 ist der zweite Stator 210 mit Innenstator 212, zweitem Polrohr 216 (nicht gezeigt), zweiter Spule 218 und Außenstator 214 angeordnet. Im montierten Zustand ist der zweite Rotor 220, welcher auch als Magnetring ausgebildet ist, exakt zwischen den Außenfingern 215 des Außenstators 214 und den Innenfingern 213 (nicht gezeigt) des Innenstators 212 angeordnet.

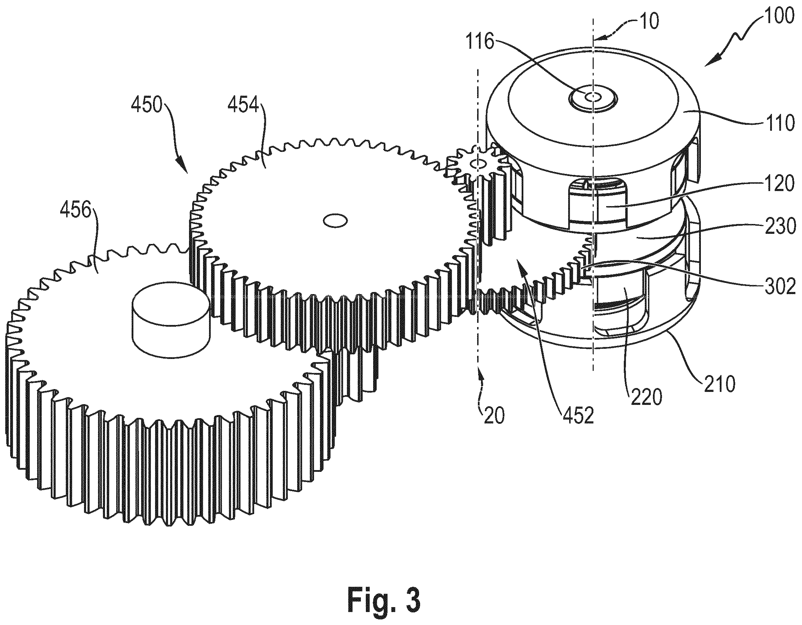

Die Figur 3 zeigt eine perspektivische Darstellung eines erfindungsgemäßen Schrittmotors 100 in Verbindung mit einem Stirnradgetriebe 450 in einer beispielhaften Ausführungsform. Der Schrittmotor 100 umfasst den ersten Stator 110 und den zweiten Stator 210. Zusätzlich hat der Schrittmotor 100 den ersten Rotor 120 und den zweiten Rotor 220. Die erste Rotationsachse 30 des ersten Rotors 120, die zweite Rotationsachse 40 des zweiten Rotors 220 liegen auf einer gemeinsame Drehachse 10.

Zwischen dem ersten Magnetträger 130 (nicht gezeigt) und dem zweiten Magnetträger 230 ist das Verbindungselement 300 (nicht gezeigt) angeordnet. Das Verbindungselements 300 verbindet den ersten Magnetträger 130 und den zweiten Magnetträger 230 drehfest miteinander, wodurch ein Drehmoment der ersten Rotor-Statoranordnung auf die zweite Rotor-Statoranordnung übertragen wird und umgekehrt. Durch das Verbindungselement 300 besteht ein axialer Abstand zwischen dem ersten Rotor 120 und dem zweiten Rotor 220. Durch eine Außenverzahnung 302 (nicht gezeigt) am Verbindungselement 300 kann ein erstes Abtriebselement 452 das Drehmoment des Schrittmotors 100 unmittelbar auf ein Stirnradgetriebe 450 übertragen. Hierbei wird das Drehmoment vom ersten Abtriebselement 452 über ein zweites Abtriebselement 454 auf ein drittes Abtriebselement übertragen.

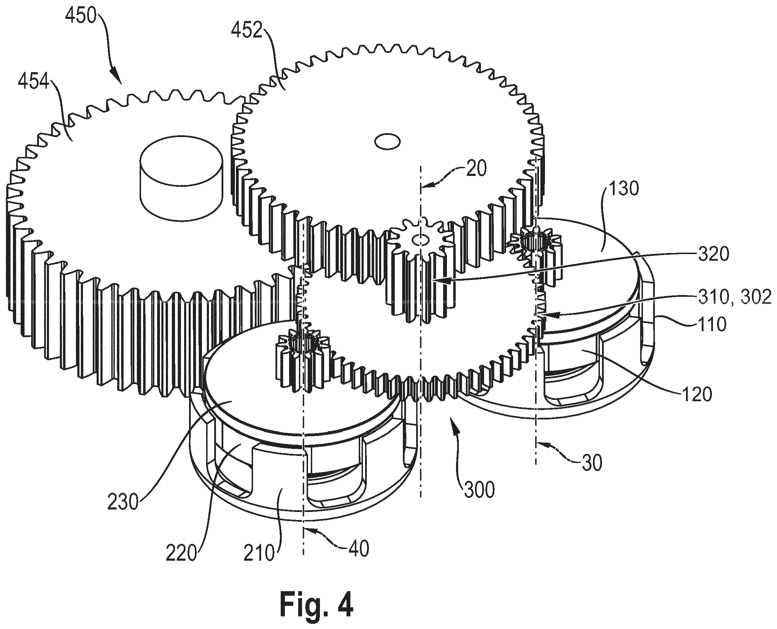

Die Figur 4 zeigt eine perspektivische Darstellung eines Schrittmotors 100 in Verbindung mit einem Stirnradgetriebe 450. Der Schrittmotor 100 umfasst einen ersten Stator 110 und einen ersten Rotor 120, welcher bezüglich des ersten Stators 110 rotierbar angeordnet ist. Zusätzlich weist der Schrittmotor 100 einen zweiten Stator 210 und einen zweiten Rotor 220 auf, wobei der zweite Rotor 220 bezüglich des zweiten Stators 210 rotierbar angeordnet ist.

Der erste Stator 110 umfasst einen Innenstator 112 und einen Außenstator 114, wobei sich zwischen dem Innenstator 112 und dem Außenstator 114 der erste Rotor 120 befindet. Entsprechend baugleich zu dem ersten Stator 110 umfasst der zweite Stator 210 einen Innenstator 212 und einen Außenstator 214, wobei sich zwischen dem Innenstator 212 und dem Außenstator 214 der zweite Rotor 220 befindet. Insgesamt ist der erste Stator 110 einschließlich des Innenstators 112, des Außenstators 114 und des ersten Rotors 120 baugleich mit dem zweiten Stator 210 einschließlich des zugeordneten Innenstators 212, des Außenstators 214 und dem zweiten Rotor 220 ausgebildet.

Ferner umfasst der Schrittmotor 100 ein Verbindungselement 300 zum Herstellen einer Drehmomentübertragung zwischen dem ersten Rotor 120 und dem zweiten Rotor 220, wobei das Verbindungselement 300 eine Rotationsachse 20 hat, die parallel zu einer ersten Rotationsachse 30 des ersten Rotors 120 und parallel zu einer zweiten Rotationsachse 40 des zweiten Rotors 220 angeordnet ist.

Mit anderen Worten sind der erste Rotor 120 und der zweite Rotor 220 parallel zueinander angeordnet und werden über das Verbindungselement 300 miteinander gekoppelt. Der erste Stator 110 und der zweite Stator 210 sind zueinander phasenversetzt angeordnet und stehen über das Verbindungselement 300 funktional miteinander in Verbindung. Alternativ oder zusätzlich sind der erste Rotor 120 und der zweite Rotor 220 zueinander phasenversetzt angeordnet. Das Verbindungselement 300 weist zusätzlich eine Außenverzahnung 302 auf, wodurch das Verbindungselement 300 als Abtriebsmittel des Schrittmotors 100 genutzt werden kann. Somit verfügt das Verbindungselement 300 über eine Doppelfunktion. Die Doppelfunktion betrifft Einerseits die Drehmomentübertragung vom ersten Rotor 120 auf den zweiten Rotor 220, wodurch in Verbindung mit der Phasenverschiebung die Funktion des Schrittmotors 100 realisiert ist. Hierfür umfasst das Verbindungselement 300 einen ersten Abschnitt 310 mit einer Außenverzahnung. Andererseits wird das Verbindungselement 300 zum Antreiben eines Stirnradgetriebes 450 eingesetzt. Hierfür verfügt das Verbindungselement 300 über einen zweiten Abschnitt 320 mit einer Außenverzahnung302, welche das Eingreifen eines ersten Abtriebselements 452 des Stirnradgetriebes 450 zulässt. Zusätzlich kann das Drehmoment auf ein zweites Abtriebselement 454 übertragen werden.

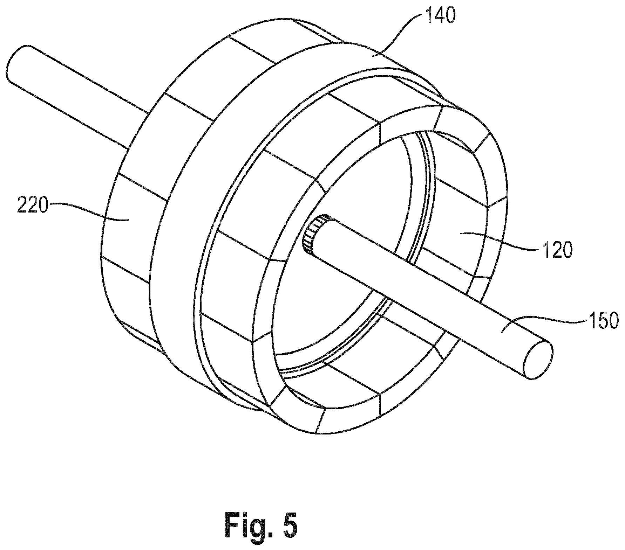

Die Figur 5 zeigt eine perspektivische Darstellung einer Rotoranordnung für einen von der Erfindung abweichenden Schrittmotor 100. Die Rotoranordnung umfasst eine Trägerscheibe 140, mit einem in axialer Richtung an die Trägerscheibe 140 angeordneten ersten Rotor 120 und zweiten Rotor 220 in Form von permanentmagnetischen Hohlzylindern. Die Trägerscheibe 140 ist beispielsweise aus Kunststoff oder Aluminium ausgebildet, wodurch eine sehr leichte Bauart realisiert werden kann. Der erste Rotor 120 und der zweite Rotor 220 werden beispielsweise von einer Oberseite und einer Unterseite auf die Trägerscheibe 140 geklebt. Alternativ zum Kleben können die Rotoren 120, 220 und die Trägerscheibe 140 auch im 2K-Spritzgussverfahren hergestellt werden. Die Rotoranordnung hat den Vorteil, dass eine sehr genaue Koaxialität bei der Montage erreichbar ist. Hinzu kommt, dass teures Permanentmagnetmaterial lediglich an denjenigen Stellen angeordnet werden muss, wo es auch für die Funktion des Schrittmotors 100 gebraucht wird. Beispielsweise können der erste Rotor 120 und der zweite Rotor 220 mit einem geeigneten axialen Abstand zueinander angeordnet werden, um einen parasitären magnetischen Fluss zwischen den sich gegenüberstehenden Statorzinken zu verhindern. Insbesondere kann die Winkellage der beiden radial polarisierten Rotoren 120, 220 zueinander frei gewählt werden, um konstruktive Vorteile bei der Winkelorientierung der Statoranordnungen zueinander erzielen zu können. Die Rotoranordnung wird von eine axialen Welle 150 getragen.

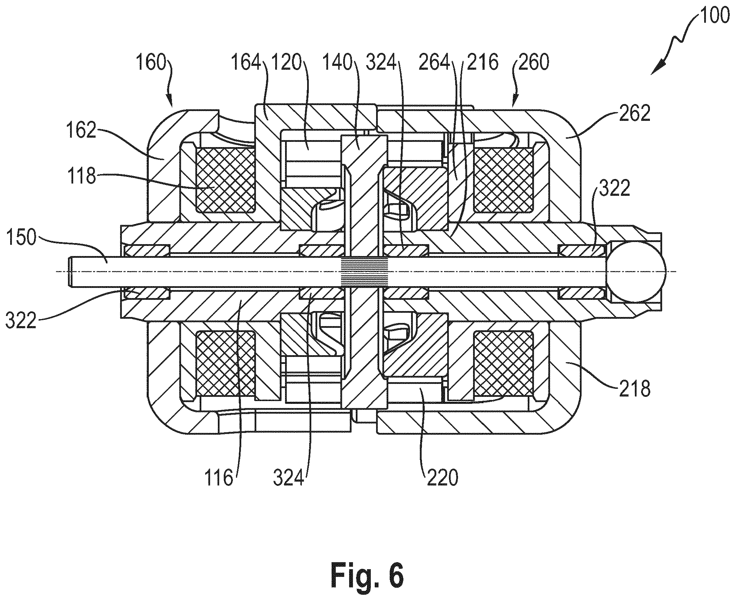

Die Figur 6 zeigt eine weitere Schnittdarstellung einer Schrittmotors 100, der von der Erfindung abweicht. Der Schrittmotor 100 umfasst eine erste Statorbaugruppe 160 und eine zweite Statorbaugruppe 260. Beide Statorbaugruppen 160, 260 sind separat voneinander auf der Welle 150 gelagert. Die erste Statorbaugruppe 160 umfasst eine am axialen Ende des Schrittmotors 100 angeordnete Außenlagerung 322 und eine an die Trägerscheibe 140 angrenzende Innenlagerung 324 auf. Entsprechend umfasst die zweite Statorbaugruppe 260 eine am axialen Ende des Schrittmotors 100 angeordnete Außenlagerung 322 und eine an die Trägerscheibe 140 angrenzende Innenlagerung 324 auf. Die Lagerstellen können beispielsweise als Wälz- oder als Gleitlager ausgebildet sein. Somit wird eine hohe Koaxialität jeder Statorbaugruppe 160, 260 zur Welle 150 hin und ein gleichmäßiger radialer Abstand zum jeweiligen Rotor 120, 220 erreicht. In einer anderen Ausführungsform kann anstelle von jeweils zwei separaten Außenlagerungen 322 und Innenlagerungen 324 für jede Statorbaugruppe 160, 260 eine axial verlängerte Lagerstelle zur Erzielung einer hohen Koaxialität verwendet werden. Hier entspricht die axiale Länge der verlängerten Lagerstelle mindestens dem dreifachen des Durchmessers der Welle 150. Die erste Statorbaugruppe 160 umfasst ein erstens Gehäuseelement 162 und die zweite Statorbaugruppe 260 umfasst ein zweites Gehäuseelement 262. Das erste Gehäuseelement 162 und das zweite Gehäuseelement 262 sind getrennt voneinander ausgebildet, wobei kein Bauteil zur Verbindung der beiden Gehäuseelemente 162, 262 über einen Außendurchmesser des beiden Gehäuseelemente 162, 262 hinausgeht. Die Ausrichtung und die Fixierung der ersten Statorbaugruppe 160 und der zweiten Statorbaugruppe 260 erfolgt über den aus Kunststoff hergestellten Wicklungsträger 164 der ersten Spule 118 und den Wicklungsträger 264 der zweiten Spule 218. Hierbei wird zwischen dem Wicklungsträger 164 der ersten Spule 118 und dem ersten Polrohr 116, sowie zwischen dem Wicklungsträger 264 der zweiten Spule 218 und dem zweiten Polrohr 216 eine feste Verbindung hergestellt.

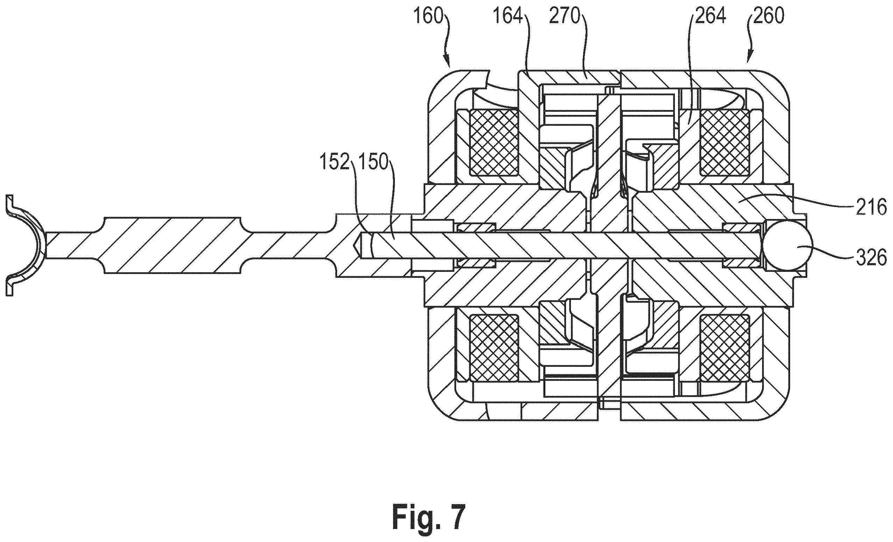

Die Figur 7 zeigt eine noch weitere Schnittdarstellung eines Schrittmotors 100, der sich von der Erfindung unterscheidet. Zu Abstützung von Axialkräften, wie sie beispielsweise durch den Einsatz von Schneckengetrieben an oder mit der Welle 150 entstehen, wird ein Axiallagerelement 326 beispielsweise in Form einer Kugel, eines Kegels oder einer stumpfen Lagerung eingesetzt. Beispielsweise kann das Axiallagerelement 326 auf einer von dem Schneckengetriebe 152 abgewandten Seite der Schrittmotors 100 angeordnet werden. Vorzugsweise ist das Axiallagerelement 326 zumindest teilweise in die zweite Statorbaugruppe 260 integriert. Beispielsweise kann das Axiallagerelement 326 zumindest teilweise in das zweite Polrohr 216 integriert werden. Alternativ oder zusätzlich kann ein Federelement in das Axiallagerelement 326 integriert sein, um die axiale Abstützung zu verbessern.

Das freie Ende der Welle 150 kann axial konkav oder konvex ausgeführt sein, wodurch sich das Schneckengetriebe 152 an einem weiteren Axiallagerelement abstützen kann. Dieses weitere Axiallagerelement kann ein zusätzliches Federelement aufweisen und in ein Kunststoffbauteil integriert ausgebildet sein. Dadurch kann die Axialkraft abgestützt werden, wobei das Federelement eine Toleranzkompensation sicherstellt. Um den Schrittmotor 100 möglichst einfach und präzise zu montieren verfügt der Wicklungsträger 164 der erste Spule 118 und/ oder der Wicklungsträger 264 der zweiten Spule 218 über eine Kontur 270. Die Kontur 270 ist dazu ausgebildet zwischen zwei benachbarten Außenfingern 115 des jeweiligen Außenstators 114, 214 eingefügt zu werden, wodurch sich eine exakte Ausrichtung ergibt. In dieser ausgerichteten Anordnung kann der Wicklungsträger 164 der erste Spule 118 oder der Wicklungsträger 264 der zweiten Spule 218 mit dem Außenstator 114, 214 verschweißt oder verklebt werden.

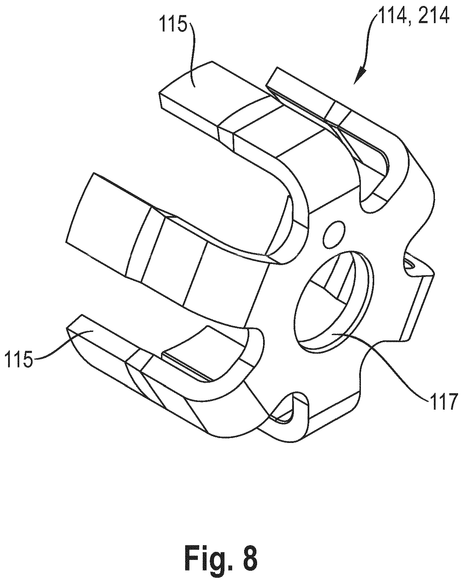

Die Figur 8 zeigt eine perspektivische Darstellung eines Außenstators 114, 214 eines erfindungsgemäßen Schrittmotors 100. Der Außenstator 114, 214 umfasst insgesamt sechs Außenfinger 115, die in einer Umfangsrichtung um den Außenstator 214 herum in zueinander gleichen Abständen ausgebildet sind. Zusätzlich weist der Außenstator 114, 214 eine Pohlrohraufnahme 117 zur Aufnahme eines Pohlrohrs 116, 216 auf. Der Außenstator 114, 214 kann beispielsweise durch Tiefziehen und Radialstanzen hergestellt werden. Alternativ kann der Außenstator 214 durch Längs- oder Querpressen hergestellt werden, wobei stoffschlüssige Verbindungen mittel Klebens oder Laserfügens herstellbar sind.

## Patentansprüche

1. Schrittmotor (100), mit:
- einem ersten Stator (110),
- einem ersten Rotor (120), welcher bezüglich des ersten Stators (110) rotierbar angeordnet ist,
- einem zweiten Stator (210),
- einem zweiten Rotor (220), welcher bezüglich des zweiten Stators (210) rotierbar angeordnet ist,
- einem Verbindungselement (300), welches den ersten Rotor (120) und den zweiten Rotor (220) drehfest miteinander verbindet
**dadurch gekennzeichnet, dass**
sich ein Axialdurchgang (102) von dem ersten Rotor (120) und dem ersten Stator (110),
durch das Verbindungselement (300) hindurch, und durch den zweiten Rotor (220) und den zweiten Stator (210) erstreckt, wobei der Axialdurchgang (102) zum Anordnen des Schrittmotors (100) auf einem raumfesten Stift (400) ausgebildet ist.

2. Schrittmotor (100) nach Anspruch 1, **dadurch gekennzeichnet, dass** das Verbindungselement (300) zwischen dem ersten Rotor (120) und dem zweiten Rotor (220) angeordnet ist.

3. Schrittmotor (100) nach Anspruch 1 oder 2, **dadurch gekennzeichnet, dass** das Verbindungselement (300) einen axialen Abstand zwischen dem ersten Rotor (120) und dem zweiten Rotor (220) ausbildet.

4. Schrittmotor (100) nach einem der vorstehenden Ansprüche, **dadurch gekennzeichnet, dass** der erste Rotor (120) und der zweite Rotor (220) eine gemeinsame Drehachse (10) aufweisen.

5. Schrittmotor (100) nach einem der vorstehenden Ansprüche, **dadurch gekennzeichnet, dass** das Verbindungselement (300) als Abtriebsmittel des Schrittmotors (100) ausgebildet ist.

6. Schrittmotor (100) nach Anspruch 5, **dadurch gekennzeichnet, dass** das Verbindungselement (300) eine Aussenverzahnung (302) aufweist.

7. Schrittmotor (100) nach einem der vorstehenden Ansprüche, **dadurch gekennzeichnet, dass** das Verbindungselement (300) hülsenartig ausgebildet ist.

8. Schrittmotor (100) nach einem der vorstehenden Ansprüche, **dadurch gekennzeichnet, dass** das Verbindungselement (300) eine Innenverzahnung aufweist.

9. Schrittmotor (100) nach einem der vorstehenden Ansprüche, **dadurch gekennzeichnet, dass** der erste Stator (110) und/ oder der zweite Stator (210) jeweils einen Innenstator (112, 212) und einen Aussenstator (114, 214) aufweisen.

10. Schrittmotor (100) nach einem der vorstehenden Ansprüche, **dadurch gekennzeichnet, dass** der erste Rotor (120) an einem ersten Magnetträger (130) angeordnet ist und der zweite Rotor (220) an einem zweiten Magnetträger (230) angeordnet ist, wobei der erste Magnetträger (130) und der zweite Magnetträger (230) jeweils drehfest mit dem Verbindungselement (300) verbunden sind.

11. Schrittmotor (100) nach einem der vorstehenden Ansprüche, **dadurch gekennzeichnet, dass** der erste Stator (110) einschliesslich des zugeordneten Innenstators (112), des Aussenstators (114) und des ersten Rotors (120) baugleich mit dem zweiten Stator (210) einschliesslich des zugeordneten Innenstators (212), des Aussenstators (214) und dem zweiten Rotor (220) ausgebildet ist.

12. Schrittmotor (100) nach einem der vorstehenden Ansprüche, **dadurch gekennzeichnet, dass** der erste Stator (110) und der zweite Stator (210) und/oder der erste Rotor (120) und der zweite Rotor (220) zueinander phasenversetzt angeordnet sind.

13. Fluidhandhabungselement (500) mit einem Schrittmotor (100) nach einem der Ansprüche 1 bis 12.

14. Thermomanagementmodul (800) für ein zumindest teilweise betriebenes Kraftfahrzeug, wobei das Thermomanagementmodul einen Schrittmotor (100) oder mit ein Fluidhandhabungselement (500) nach einem der vorstehenden Ansprüche aufweist.

## Claims

1. Stepper motor (100) comprising:
- a first stator (110),
- a first rotor (120) which is rotatably arranged with respect to the first stator (110),
- a second stator (210),
- a second rotor (220) which is rotatably arranged with respect to the second stator (210),
- a connecting element (300) which connects the first rotor (120) and the second rotor (220) to one another in a rotationally fixed manner,
**characterized in that**
an axial passage (102) extends from the first rotor (120) and the first stator (110), through the connecting element (300), and through the second rotor (220) and the second stator (210), wherein the axial passage (102) is configured for arranging the stepper motor (100) on a fixed pin (400).

2. Stepper motor (100) according to claim 1, **characterized in that** the connecting element (300) is arranged between the first rotor (120) and the second rotor (220).

3. Stepper motor (100) according to claim 1 or 2, **characterized in that** the connecting element (300) forms an axial distance between the first rotor (120) and the second rotor (220).

4. Stepper motor (100) according to one of the preceding claims, **characterized in that** the first rotor (120) and the second rotor (220) comprise a common axis of rotation (10).

5. Stepper motor (100) according to one of the preceding claims, **characterized in that** the connecting element (300) is configured as an output means of the stepper motor (100).

6. Stepper motor (100) according to claim 5, **characterized in that** the connecting element (300) comprises outer gear teeth (302).

7. Stepper motor (100) according to one of the preceding claims, **characterized in that** the connecting element (300) is configured in a sleeve-like manner.

8. Stepper motor (100) according to one of the preceding claims, **characterized in that** the connecting element (300) comprises inner gear teeth.

9. Stepper motor (100) according to one of the preceding claims, **characterized in that** the first stator (110) and/or the second stator (210) each comprise an internal stator (112, 212) and an external stator (114, 214).

10. Stepper motor (100) according to one of the preceding claims, **characterized in that** the first rotor (120) is arranged on a first magnet carrier (130) and the second rotor (220) is arranged on a second magnet carrier (230), wherein the first magnet carrier (130) and the second magnet carrier (230) are each connected to the connecting element (300) in a rotationally fixed manner.

11. Stepper motor (100) according to one of the preceding claims, **characterized in that** the first stator (110) including the associated internal stator (112), the external stator (114) and the first rotor (120), is configured in a structurally identical manner to the second stator (210) including the associated internal stator (212), the external stator (214) and the second rotor (220).

12. Stepper motor (100) according to one of the preceding claims, **characterized in that** the first stator (110) and the second stator (210) and/or the first rotor (120) and the second rotor (220) are arranged in a phase-shifted manner with respect to one another.

13. Fluid handling element (500) comprising a stepper motor (100) according to one of claims 1 to 12.

14. Thermal management module (800) for an at least partially operated motor vehicle, wherein the thermal management module comprises a stepper motor (100) or a fluid handling element (500) according to one of the preceding claims.

## Revendications

1. Moteur pas à pas (100), comprenant :
- un premier stator (110),
- un premier rotor (120) qui est disposé de manière à pouvoir tourner par rapport au premier stator (110),
- un deuxième stator (210),
- un deuxième rotor (220) qui est disposé de manière à pouvoir tourner par rapport au deuxième stator (210),
- un élément de liaison (300) qui relie de manière immobile en rotation le premier rotor (120) et le deuxième rotor (220) entre eux,
**caractérisé en ce que**
un passage axial (102) s'étend depuis le premier rotor (120) et le premier stator (110), à travers l'élément de liaison (300), et à travers le deuxième rotor (220) et le deuxième stator (210), dans lequel le passage axial (102) est configuré de manière à pouvoir positionner le moteur pas à pas (100) sur une broche (400) fixe.

2. Moteur pas à pas (100) selon la revendication 1, **caractérisé en ce que** l'élément de liaison (300) est disposé entre le premier rotor (120) et le deuxième rotor (220).

3. Moteur pas à pas (100) selon la revendication 1 ou 2, **caractérisé en ce que** l'élément de liaison (300) forme un espacement axial entre le premier rotor (120) et le deuxième rotor (220).

4. Moteur pas à pas (100) selon l'une des revendications précédentes, **caractérisé en ce que** le premier rotor (120) et le deuxième rotor (220) présentent un axe de rotation commun (10).

5. Moteur pas à pas (100) selon l'une des revendications précédentes, **caractérisé en ce que** l'élément de liaison (300) est configuré comme un moyen de sortie du moteur pas à pas (100).

6. Moteur pas à pas (100) selon la revendication 5, **caractérisé en ce que** l'élément de liaison (300) présente une denture extérieure (302).

7. Moteur pas à pas (100) selon l'une des revendications précédentes, **caractérisé en ce que** l'élément de liaison (300) est configuré comme une douille.

8. Moteur pas à pas (100) selon l'une des revendications précédentes, **caractérisé en ce que** l'élément de liaison (300) présente une denture intérieure.

9. Moteur pas à pas (100) selon l'une des revendications précédentes, **caractérisé en ce que** le premier stator (110) et/ou le deuxième stator (210) présentent chacun un stator intérieur (112, 212) et un stator extérieur (114, 214).

10. Moteur pas à pas (100) selon l'une des revendications précédentes, **caractérisé en ce que** le premier rotor (120) est disposé sur un premier support magnétique (130) et le deuxième rotor (220) est disposé sur un deuxième support magnétique (230), dans lequel le premier support magnétique (130) et le deuxième support magnétique (230) sont chacun reliés de manière immobile en rotation à l'élément de liaison (300).

11. Moteur pas à pas (100) selon l'une des revendications précédentes, **caractérisé en ce que** le premier stator (110), y compris le stator intérieur (112) associé, le stator extérieur (114) et le premier rotor (120), est de configuration identique au deuxième stator (210), y compris le stator intérieur (212) associé, le stator extérieur (214) et le deuxième rotor (220).

12. Moteur pas à pas (100) selon l'une des revendications précédentes, **caractérisé en ce que** le premier stator (110) et le deuxième stator (210) et/ou le premier rotor (120) et le deuxième rotor (220) sont disposés de manière déphasée les uns par rapport aux autres.

13. Élément de manipulation de fluide (500) comprenant un moteur pas à pas (100) selon l'une des revendications 1 à 12.

14. Module de gestion thermique (800) pour un véhicule automobile au moins partiellement exploité, dans lequel le module de gestion thermique présente un moteur pas à pas (100) ou un élément de manipulation de fluide (500) selon l'une des revendications précédentes.
